# EUROPEAN PATENT SPECIFICATION

(11) **EP 3 321 161 B1**
(45) Date of publication and mention of the grant of the patent: **03.07.2019**
(21) Application number: 17172691.2
(22) Date of filing: 24.05.2017
(51) Int. Cl.: B62M 7/12, B62K 11/10

(54) **STRADDLED VEHICLE**
GRÄTSCHSITZFAHRZEUG
VÉHICULE À ENFOURCHER

(30) Priority: 09.11.2016 JP 2016219079
(43) Date of publication of application: 16.05.2018
(73) Proprietor: Yamaha Hatsudoki Kabushiki Kaisha, Iwata-shi Shizuoka 438-8501 (JP)
(72) Inventor: YUIZONO, Jun, Iwata-shi, Shizuoka 438-8501 (JP); OTA, Kosuke, Iwata-shi, Shizuoka 438-8501 (JP)
(74) Representative: Grünecker Patent- und Rechtsanwälte PartG mbB

(56) References cited:
- EP-A1- 1 767 759
- EP-A1- 1 860 320
- EP-A2- 1 128 087
- US-A1- 2002 027 032

## Description

An engine unit (a power unit) including an engine and a transmission is sometimes used in a motorcycle such as a scooter. For example, in JP 4467377 B2, a unit-swing type power unit having a dry sump type lubrication device is described. In the power unit, the transmission is arranged at a position further rearward than the engine. Further, in a crankcase of the engine, a scavenge pump is arranged at a position obliquely further forward and downward than a crankshaft when seen in side view. The scavenge pump sends oil, which has flown downward from a crank chamber to an oil pan, to an oil tank.

Further, in JP 2008-114809 A, a power unit including an engine, a Continuously Variable Transmission, a balancer, a starter motor and the like is described. Also in this power unit, the transmission is arranged at a position further rearward than the engine. The balancer is arranged at a position further upward than a crankshaft, and the starter motor is arranged at a position further rearward than the balancer and further upward than a crankcase.
Document EP1767759 A1 further discloses a straddled vehicle according to the preamble of claim 1. EP1128087 A2 shows a combustion engine which comprises a balancer, a starter and an oil pump.

The inventors of the present application have considered to provide a starter motor and a balancer in an engine unit having a scavenge pump. However, the engine unit having the scavenge pump has a relatively large dimension in a top-and-bottom direction. When the starter motor and the balancer are provided at such an engine unit, a dimension of the engine unit in the top-and-bottom direction is further increased. In that case, it is necessary to increase a height of a position of another member such as a seat, and a size of a motorcycle is increased in the top-and-bottom direction. On the other hand, when a dimension of the engine unit in a front-and-rear direction is increased, it is necessary to provide a rear wheel at a further rearward position, and a size of the motorcycle is increased in the front-and-rear direction. Therefore, it is desired that the starter motor and the balancer are provided without prevention of an engine system having the scavenge pump from being made compact.

It is an object of the present invention to provide a straddled vehicle including a compact engine system including a starter motor, a balancer and a scavenge pump.

A straddled vehicle according to one aspect of the present invention includes a body frame, and an engine unit attached to the body frame, wherein the engine unit includes an engine that has a crankcase, a cylinder provided at a position further forward than the crankcase in a vehicle front-and-rear direction to be attached to the crankcase, a cylinder head provided at a position further forward than the cylinder to be attached to the cylinder, and a head cover provided at a position further forward than the cylinder head to be attached to the cylinder head, an intake pipe that extends rearward in the vehicle front-and-rear direction from an upper surface of the cylinder head of the engine, a starter motor that is configured to rotate a crankshaft of the engine, a balancer that is configured to rotate to reduce vibration of the crankshaft, and a scavenge pump that is configured to collect oil in the crankcase of the engine, the scavenge pump is arranged at a position further downward than the crankshaft of the engine in a vehicle side view, a dimension of the starter motor in a top-and-bottom direction is smaller than a dimension of a rotation trajectory of the balancer in the top-and-bottom direction in the vehicle side view, a center axis of the balancer is arranged at a position further upward than the center axis of the crankshaft in the vehicle side view, and the balancer is arranged at a position further downward than the intake pipe and further rearward than the starter motor in the vehicle side view, the engine is arranged such that the crankcase and the cylinder head do not overlap with each other in a vehicle plan view, the starter motor is arranged at a position further downward than the intake pipe (74) in the vehicle side view, characterized in that the engine (60) is further arranged such that a center axis (C1) of the cylinder (62) is located at a position further downward than a center axis (C2) of the crankshaft (CS) in a cross section orthogonal to the vehicle front-and-rear direction (L), the starter motor is further arranged at a position further upward than the cylinder in the vehicle side view, and is arranged to at least partially overlap with the cylinder in the vehicle plan view.

In this straddled vehicle, the engine unit is attached to the body frame. In the engine system, the crankshaft of the engine is rotated by the starter motor. The vibration of the crankshaft is reduced by the rotation of the balancer. The oil in the crankcase of the engine is collected by the scavenge pump. Thus, the engine can be lubricated.

In the vehicle side view, the center axis of the balancer is arranged at a position further upward than the center axis of the crankshaft, and the scavenge pump is arranged at a position further downward than the crankshaft. The balancer is arranged at a position further downward than the intake pipe and further rearward than the starter motor in the vehicle side view. In this arrangement, the center axis of the cylinder of the engine is located at a position further downward than the center axis of the crankshaft in a cross section orthogonal to the vehicle front-and-rear direction. Further, in the vehicle plan view, the crankcase and the cylinder head do not overlap with each other. Therefore, a space located at a position further upward than the cylinder is largely ensured.

Then, the starter motor is arranged at a position further upward than the cylinder in the vehicle side view, and is arranged to at least partially overlap with the cylinder in the vehicle plan view. Further, the dimension of the starter motor in the top-and-bottom direction is smaller than the dimension of the rotation trajectory of the balancer in the top-and-bottom direction in the vehicle side view. Thus, the starter motor is inhibited from projecting upward. Further, the starter motor and the balancer can be arranged at positions further downward than the intake pipe. As a result, the straddled vehicle that includes the compact engine system including the starter motor, the balancer and the scavenge pump is realized.

The straddled vehicle may further include a storage box provided at a position further upward than the engine and further downward than a seat, wherein the engine unit may be configured to be a unit-swing type, the body frame may have a pivot shaft, the engine unit may further include a suspension portion that attaches the crankcase to the pivot shaft of the body frame, the suspension portion may be arranged at a position further upward than the cylinder and further forward than the balancer in the vehicle front-and-rear direction in the vehicle side view, and a center axis of the starter motor may be located at a position further downward than the suspension portion in the vehicle side view.

In this case, the engine unit swings about the suspension portion attached to the pivot shaft of the body frame. The larger a distance between each portion of the engine unit and the suspension portion is, the larger a swing width of the portion of the engine unit in the top-and-bottom direction is. Therefore, the larger a distance between a space, which is provided to allow the engine unit to swing, and the suspension portion is, the larger the space is. Then, the suspension portion and the starter motor are arranged at positions further forward than the balancer in the vehicle front-and-rear direction, so that a space in which the balancer is allowed to swing is larger than a space in which the starter motor is allowed to swing. Therefore, the balancer having the dimension of the rotation trajectory that is larger than the dimension of the starter motor in the top-and-bottom direction is arranged at a position further rearward than the starter motor, whereby a swing range can be largely ensured in the engine unit.

Further, the center axis of the starter motor is located at a position further downward than the suspension portion in the vehicle side view, so that the starter motor is more sufficiently inhibited from projecting upward. Thus, it is unnecessary to increase a height of a position of another member such as the seat, and a volume of the storage box located at a position further downward than the seat can be largely ensured.

A lower surface of the storage box may be inclined upward and rearward at a position further upward than the balancer, the starter motor and the suspension portion. In this case, the size of the space for allowing the engine unit to swing can be increased while the large volume of the storage box is maintained.

The suspension portion may be arranged to partially overlap with the starter motor in the vehicle side view. In this case, the suspension portion can be inhibited from projecting upward. Thus, the straddled vehicle can be more easily made compact in the top-and-bottom direction.

The suspension portion may be arranged between the intake pipe and the cylinder in the vehicle side view. In this case, the intake pipe can be drawn rearward through a position further upward than the suspension portion without largely bypassing the suspension portion. Further, a bend radius of the intake pipe can be increased. This can extend the life of the intake pipe.

### BRIEF DESCRIPTION OF THE SEVERAL VIEWS OF THE DRAWING

Fig. 1 is a schematic side view showing a schematic configuration of a motorcycle according to one embodiment;
Fig. 2 is a plan view for explaining an outline of a configuration of an engine unit;
Fig. 3 is a right side view showing the configurations of the engine unit and its periphery;
Fig. 4 is a plan view showing the configurations of the engine unit and its periphery;
Fig. 5 is a cross sectional view taken along the line A-A of a crankcase of Fig. 3; and
Fig. 6 is a diagram for explaining a relationship between swinging of the engine unit and arrangement of constituent elements.

A straddled vehicle according to one embodiment will be described below with reference to the drawings. In the following description, a motorcycle is described as one example of the straddled vehicle.

### (1) Schematic Configuration of Motorcycle

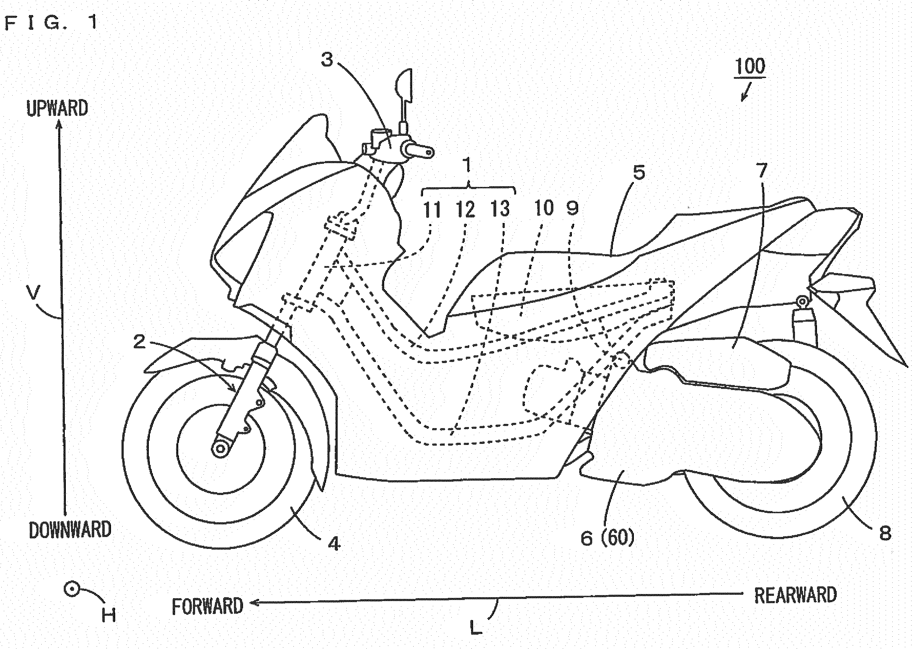

Fig. 1 is a schematic side view showing the schematic configuration of the motorcycle according to the one embodiment. In Fig. 1, the motorcycle 100 standing up to be perpendicular to the road surface is shown. In Fig. 1 and part of subsequent given diagrams, arrows indicate a front-and-rear direction L, a width direction H and a top-and-bottom direction V of the motorcycle 100. In the following description, a direction in which the arrow is directed in the front-and-rear direction L is referred to as forward, and its opposite direction is referred to as rearward. Further, a direction in which the arrow is directed in the width direction H is referred to as leftward, and its opposite direction is referred to as rightward. Further, a direction in which the arrow is directed in the top-and-bottom direction V is referred to as upward, and its opposite direction is referred to as downward.

The motorcycle 100 of Fig. 1 includes a body frame 1. The body frame 1 mainly includes a head pipe 11, an upper frame 12 and a lower frame 13. The upper frame 12 is formed to extend rearward from a position in the vicinity of an upper end of the head pipe 11. The lower frame 13 extends rearward from a position in the vicinity of a lower end of the head pipe 11 at a position further downward than the upper frame 12. Specifically, a front half of the lower frame 13 extends obliquely downward and rearward from the position in the vicinity of the lower end of the head pipe 11 by a constant distance and is curved rearward. A rear half of the lower frame 13 extends obliquely upward and rearward from the front half of the lower frame 13 and is connected to a rear end of the upper frame 12.

A front fork 2 is provided at the head pipe 11 to be swingable in the width direction H. A handle 3 is attached to an upper end of the front fork 2, and a front wheel 4 is rotatably attached to a lower end of the front fork 2.

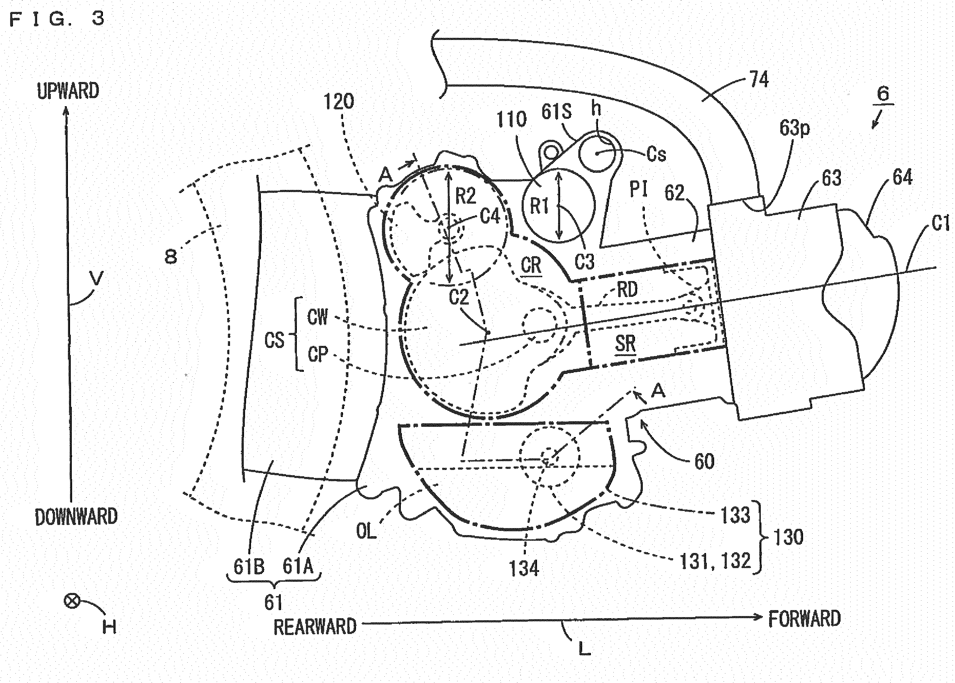

A unit-swing type engine unit 6 is provided at a position in the vicinity of a rear end of the body frame 1 to further extend rearward from the rear half of the lower frame 13. In the engine unit 6, an engine 60 is provided. Further, in the engine unit 6, a starter motor 110 (Fig. 3, described below) and a balancer 120 (Fig. 3, described below) are provided, and an oil supply device 130 (Fig. 3, described below) is provided. Details will be described below.

A seat 5 is provided at a position further upward than a rear half of the upper frame 12 to extend in the front-and-rear direction L. A storage box 10 in which personal belongings of a rider can be stored is provided at a position further downward than the seat 5. The seat 5 is also used as a lid of the storage box 10. A lower surface of the storage box 10 has a shape inclined upward and rearward at a position further upward than the balancer 120, the starter motor 110 and a suspension portion 61S of Fig. 3, described below.

An air cleaner 7 is provided on the engine unit 6. The engine unit 6 is supported at the body frame 1 via a pivot shaft 9. A rear wheel 8 is rotatably attached to a position in the vicinity of a rear end of the engine unit 6. The engine unit 6 is swingable about the pivot shaft 9 in the top-and-bottom direction V together with the rear wheel 8. The rear wheel 8 is rotated by the power generated by the engine unit 6.

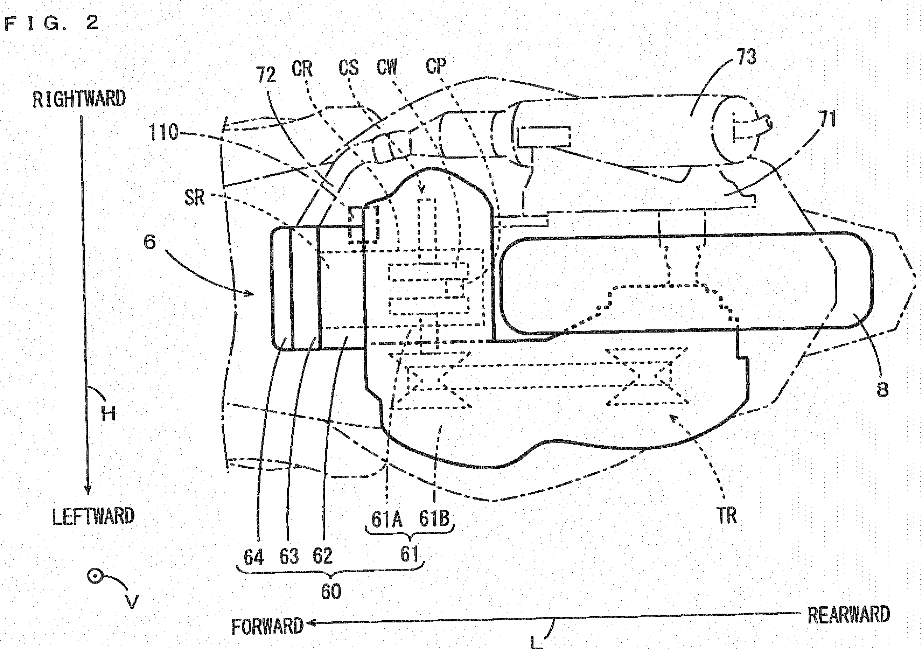

Fig. 2 is a plan view for explaining an outline of a configuration of the engine unit 6. Fig. 2 mainly shows a plan view of the engine unit 6 and the rear wheel 8. Further, in Fig. 2, one-dot and dash lines indicate the appearance of a rear half of the motorcycle 100.

As shown in Fig. 2, the engine unit 6 includes a unit case 61, a cylinder 62, a cylinder head 63 and a head cover 64. The cylinder 62 is provided at a front end of the unit case 61. The cylinder head 63 is provided at a front end of the cylinder 62. A cylinder chamber SR is formed inside of the cylinder head 63. The head cover 64 is provided at a front end of the cylinder head 63.

The unit case 61 has a configuration in which a crankcase 61A and a belt case 61B are integrally formed. The crankcase 61A extends in the width direction H at a position further forward than the rear wheel 8. A crankshaft CS is mainly stored in the crankcase 61A. Further, a crank chamber CR that opens to the cylinder chamber SR is formed in the crankcase 61A. Crank webs CW and a crankpin CP of the crankshaft CS are located in the crank chamber CR.

The belt case 61B extends rearward from a left portion of the crankcase 61A. In the example of Fig. 2, a thick two-dots and dash line indicates a boundary portion between the crankcase 61A and the belt case 61B. In the belt case 61B, a belt-type Continuously Variable Transmission (CVT) TR is mainly stored.

A swingarm 71 is attached to a right end of the unit case 61 to extend in the front-and-rear direction L at a position further rightward than the rear wheel 8. The rear wheel 8 is held by a rear end of the belt case 61B and a rear end of the swingarm 71. A silencer 73 is attached to a right side portion of the swingarm 71. One end of an exhaust pipe 72 is connected to an exhaust port of the cylinder head 63. The exhaust pipe 72 extends rightward and rearward from the cylinder head 63. The other end of the exhaust pipe 72 is connected to the silencer 73.

### (2) Configuration of Engine Unit

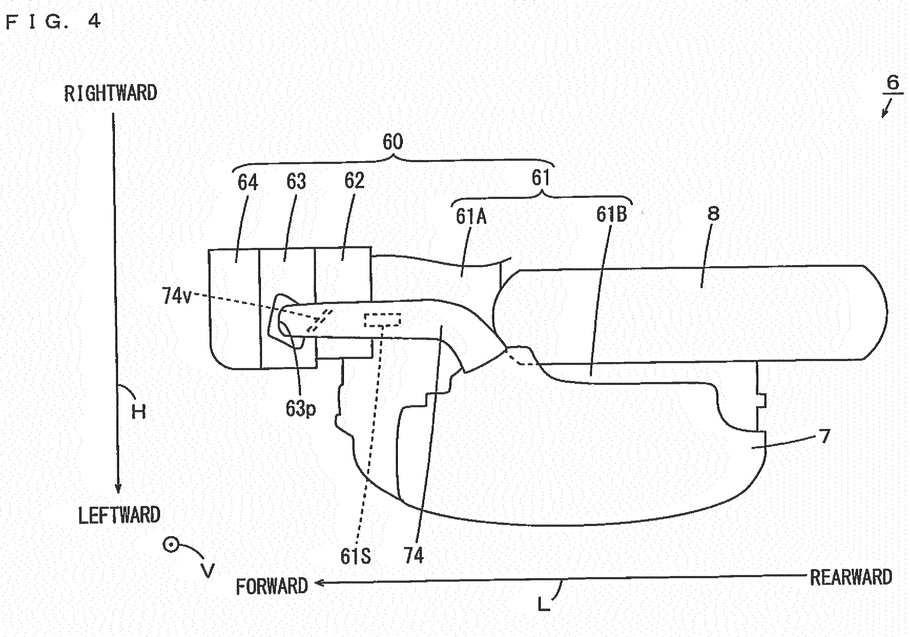

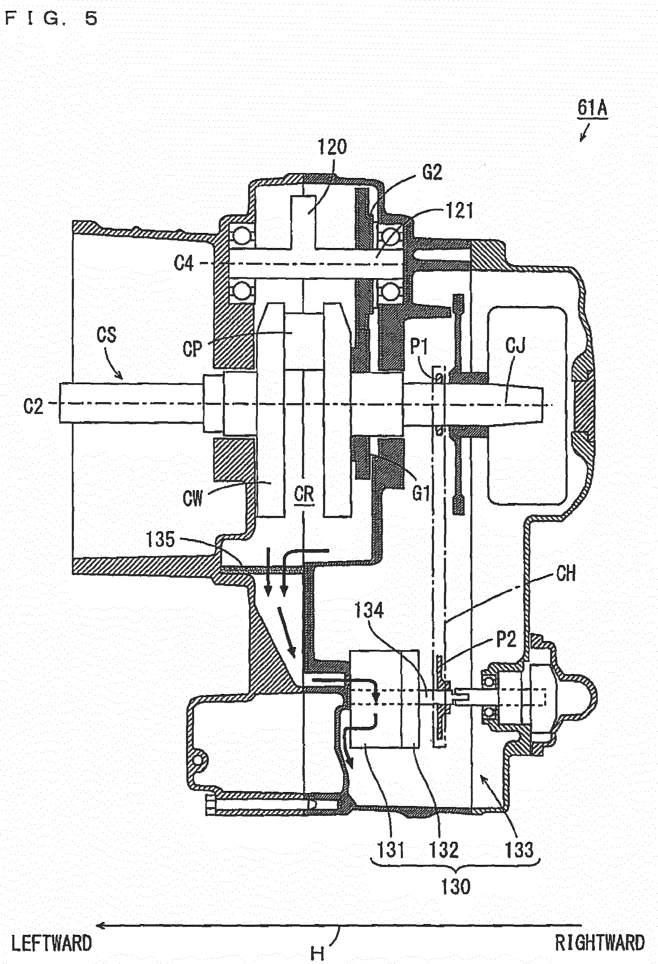

Fig. 3 is a right side view showing the configurations of the engine unit 6 and its periphery. Fig. 4 is a plan view showing the configurations of the engine unit 6 and its periphery. Fig. 5 is a cross sectional view taken along the line A-A of the crankcase 61A of Fig. 3. In Fig. 3, thick one-dot and dash lines indicate outer shapes of the cylinder chamber SR, the crank chamber CR and a flow path space 133, described below.

As shown in Fig. 3, in the engine 60, the cylinder 62 is provided at a position further forward than the unit case 61 in the front-and-rear direction L to be attached to the unit case 61. A piston PI is provided in the cylinder chamber SR of the cylinder 62. The cylinder 62 is arranged such that its center axis (a cylinder axis) C1 is located at a position further downward than a center axis (a center portion of a crank journal CJ of Fig. 5) C2 of the crankshaft CS.

The cylinder head 63 is provided at a position further forward than the cylinder 62 to be attached to the cylinder 62. In a vehicle plan view, the crankcase 61A and the cylinder head 63 do not overlap with each other (see Fig. 4). An intake port 63p is formed in an upper surface of the cylinder head 63. The head cover 64 is provided at a position further forward than the cylinder head 63 to be attached to the cylinder head 63.

As shown in Fig. 3, the suspension portion 61S is provided at a front end of an upper end of the crankcase 61A. The suspension portion 61S is located at a position further upward than the cylinder 62 in a vehicle side view. The pivot shaft 9 (Fig. 1) is inserted into a hole h of the suspension portion 61S, so that the engine unit 6 is swingably attached to the body frame 1 (Fig. 1).

The crankshaft CS, the balancer 120, a scavenge pump 131 and a feed pump 132 are mainly provided inside of the crankcase 61A. Further, the starter motor 110 is provided at a portion in the vicinity of the suspension portion 61S in a right side portion of the crankcase 61A.

The crankshaft CS is located at a substantially center portion of the crankcase 61A in the top-and-bottom direction V. Further, the crank webs CW and the crankpin CP of the crankshaft CS are located in the crank chamber CR of the crankcase 61A. The crankpin CP of the crankshaft CS is coupled to the piston PI in the cylinder chamber SR via a connecting rod RD. A gear G1 is attached to a portion of the crank journal CJ (Fig. 5) in the crank chamber CR. A sprocket P1 is attached to a portion of the crank journal CJ outside of the crank chamber CR.

The starter motor 110 of Fig. 3 is arranged at a position further upward than the cylinder 62 in the vehicle side view. The starter motor 110 at least partially overlaps with the cylinder 62 in the vehicle plan view (see Fig. 2). A center axis C3 of the starter motor 110 (Fig. 3) is located at a position further downward than the suspension portion 61S in the vehicle side view. Further, part of the starter motor 110 partially overlaps with the suspension portion 61S in the vehicle side view. The starter motor 110 rotates the crankshaft CS via a plurality of gear groups (not shown) when the engine 60 is started. In the vehicle side view, a dimension R1 of the starter motor 110 in the top-and-bottom direction is smaller than a dimension R2 of a rotation trajectory of the balancer 120, described below, in the top-and-bottom direction.

The balancer 120 is provided in the crank chamber CR, and is arranged at a position further rearward than the suspension portion 61S and the starter motor 110 in the vehicle side view. A center axis (a center portion of a rotation shaft 121 of Fig. 5) C4 of the balancer 120 is located at a position further upward than a center axis C2 of the crankshaft CS in the vehicle side view. In the vehicle side view, a distance from a pivot center Cs to the center axis C4 of the balancer 120 is larger than a distance from the pivot center Cs to the center axis C3 of the starter motor 110.

As shown in Fig. 5, a gear G2 is attached to the rotation shaft 121 of the balancer 120. The gear G2 engages with the gear G1 of the crankshaft CS. The balancer 120 is rotated by the rotation of the crankshaft CS to reduce a primary vibration of the crankshaft CS via the gears G1, G2. The balancer 120 substantially has a form of a sector in the vehicle side view and draws a circular trajectory by being rotated. In Fig. 3, a two-dots and dash line indicates the rotation trajectory of the balancer 120.

As shown in Fig. 4, one end of an intake pipe 74 is connected to the intake port 63p in the upper surface of the cylinder head 63. The intake pipe 74 is drawn out rearward through an area further upward than the suspension portion 61S, the starter motor 110 (Fig. 3) and the balancer 120 (Fig. 3). As shown in Fig. 4, the other end of the intake pipe 74 is connected to the air cleaner 7 at a position further upward than the belt case 61B. Outside air is supplied to the inside of the engine 60 via the air cleaner 7, the intake pipe 74 and the intake port 63p. A throttle valve 74v for adjusting a supply amount of outside air is provided in the intake pipe 74.

As shown in Fig. 3, the flow path space 133 for oil OL for circulation of the oil OL in the engine unit 6 is formed at a position further downward than the crank chamber CR in the vehicle side view. The scavenge pump 131 and the feed pump 132 are provided in the flow path space 133 to be located at positions further downward than the crankshaft CS. In the present embodiment, the scavenge pump 131 and the feed pump 132 have a common rotation shaft 134 and are arranged to overlap with each other in the vehicle side view. The oil supply device 130 is constituted by the scavenge pump 131, the feed pump 132 and the flow path space 133.

As shown in Fig. 5, a sprocket P2 is attached to the rotation shaft 134 of the scavenge pump 131 and the feed pump 132. A chain CH is looped over the sprocket P1 of the crankshaft CS and the sprocket P2 as a power transmission member. Power is transmitted to the scavenge pump 131 and the feed pump 132 via the sprocket P1, the chain CH and the sprocket P2 by the rotation of the crankshaft CS. Thus, the scavenge pump 131 and the feed pump 132 are operated.

As indicated by thick arrows in Fig. 5, the scavenge pump 131 collects the oil OL by sucking the oil in the crankcase 61A through a strainer 135 and discharges the collected oil OL to the flow path space 133. The discharged oil OL flows in the flow path space 133. The feed pump 132 supplies the oil OL that has flowed in the flow path space 133 to each constituent member in the engine 60. Thus, the engine can be lubricated.

### (3) Relationship between Swinging of Engine Unit and Arrangement of Constituent Elements

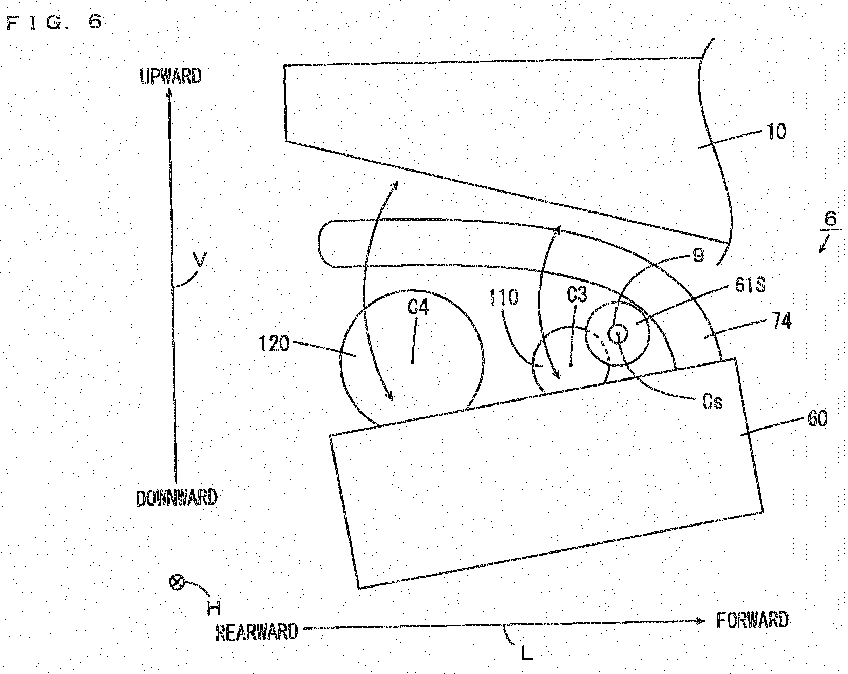

Fig. 6 is a diagram for explaining the relationship between the swinging of the engine unit 6 and the arrangement of the constituent elements. As shown in Fig. 6, the engine unit 6 swings about the suspension portion 61S attached to the pivot shaft 9. The larger a distance between each portion of the engine unit 6 and the suspension portion 61S is, the larger a swing width of the portion of the engine unit 6 in the top-and-bottom direction is. Therefore, the larger a distance between a space, which is provided to allow the engine unit 6 to swing, and the suspension portion 61S is, the larger the space is.

The suspension portion 61 S and the starter motor 110 are arranged at positions further forward than the balancer 120 in the front-and-rear direction L. Further, in the vehicle side view, a distance from the center Cs of the hole h of the suspension portion 61S to the center axis C4 of the balancer 120 is larger than a distance from the center Cs of the hole h of the suspension portion 61S to the center axis C3 of the starter motor 110. Therefore, a space in which the balancer 120 is allowed to swing is larger than a space in which the starter motor 110 is allowed to swing. Therefore, the balancer 120 having a dimension of the rotation trajectory that is larger than a dimension of the starter motor 110 in the top-and-bottom direction is arranged at a position further rearward than the starter motor 110, whereby a swing range can be largely ensured in the engine unit 6.

Further, in the vehicle side view, the center axis C3 of the starter motor 110 is located at a position further downward than the suspension portion 61S, so that the starter motor 110 is more sufficiently inhibited from projecting upward. Thus, it is not necessary to increase a height of a position of another member such as the seat 5 of Fig. 1, and a volume of the storage box 10 located at a position further downward than the seat 5 can be largely ensured. Further, the lower surface of the storage box 10 has a shape inclined upward and rearward at a position further upward than the balancer 120, the starter motor 110 and the suspension portion 61S. Thus, a space for allowing the engine unit 6 to swing can be increased while the large volume of the storage box 10 is maintained.

### (4) Effects

In the motorcycle 100 according to the present embodiment, the center axis C1 of the cylinder 62 of the engine 60 is located at a position further downward than the center axis C2 of the crankshaft CS in a cross section orthogonal to the front-and-rear direction L. Further, in the vehicle plan view, the crankcase 61A and the cylinder head 63 do not overlap with each other. Therefore, a space located at a position further upward than the cylinder 62 is largely ensured.

Then, the starter motor 110 is arranged to be located at a position further upward than the cylinder 62 in the vehicle side view and to at least partially overlap with the cylinder 62 in the vehicle plan view. Further, the dimension R1 of the starter motor 110 in the top-and-bottom direction is smaller than the dimension R2 of the rotation trajectory of the balancer 120 in the top-and-bottom direction in the vehicle side view. Thus, the starter motor 110 is inhibited from projecting upward.

Further, because the suspension portion 61S is arranged to partially overlap with the starter motor 110 in the vehicle side view, the suspension portion 61S can be inhibited from projecting upward. Thus, the motorcycle 100 can be more easily made compact in the top-and-bottom direction.

Further, the starter motor 110 and the balancer 120 can be arranged at positions further downward than the intake pipe 74. As a result, the motorcycle 100 including the compact engine unit 6 including the starter motor 110, the balancer 120 and the scavenge pump 131 is realized.

Further, in this arrangement of the intake pipe 74, the intake pipe 74 can be drawn rearward through a position further upward than the suspension portion 61S without largely bypassing the suspension portion 61S. Further, a bend radius of the intake pipe 74 can be increased. This can extend the life of the intake pipe 74.

### (5) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

The body frame 1 is an example of a body frame, the engine unit 6 is an example of an engine unit, the crankcase 61A is an example of a crankcase and the cylinder 62 is an example of a cylinder. The cylinder head 63 is an example of a cylinder head, the head cover 64 is an example of a head cover, the engine 60 is an example of an engine and the intake pipe 74 is an example of an intake pipe.

The crankshaft CS is an example of a crankshaft, the starter motor 110 is an example of a starter motor, the balancer 120 is an example of a balancer and the scavenge pump 131 is an example of a scavenge pump. The motorcycle 100 is an example of a straddled vehicle, the seat 5 is an example of a seat, the storage box 10 is an example of a storage box, the pivot shaft 9 is an example of a pivot shaft and the suspension portion 61S is an example of a suspension portion.

The present invention can be effectively utilized for various types of straddled vehicles including engine units.

## Claims

1. A straddled vehicle (100) comprising:
a body frame (1); and
an engine unit (6) attached to the body frame (1), wherein
the engine unit (6) includes
an engine (60) that has a crankcase (61A), a cylinder (62) provided at a position further forward than the crankcase (61A) in a vehicle front-and-rear direction (L) to be attached to the crankcase (61A), a cylinder head (63) provided at a position further forward than the cylinder (62) to be attached to the cylinder (62), and a head cover (64) provided at a position further forward than the cylinder head (63) to be attached to the cylinder head (63),
an intake pipe (74) that extends rearward in the vehicle front-and-rear direction (L) from an upper surface of the cylinder head (63) of the engine (60),
a starter motor (110) that is configured to rotate a crankshaft (CS) of the engine (60),
a balancer (120) that is configured to rotate to reduce vibration of the crankshaft (CS), and
a scavenge pump (131) that is configured to collect oil in the crankcase (61A) of the engine (60),
the scavenge pump (131) is arranged at a position further downward than the crankshaft (CS) of the engine (60) in a vehicle side view,
a dimension (R1) of the starter motor (110) in a top-and-bottom direction (V) is smaller than a dimension (R2) of a rotation trajectory of the balancer (120) in the top-and-bottom direction (V) in the vehicle side view,
a center axis (C4) of the balancer (120) is arranged at a position further upward than the center axis (C2) of the crankshaft (CS) in the vehicle side view, and
the balancer (120) is arranged at a position further downward than the intake pipe (74) and further rearward than the starter motor (110) in the vehicle side view,
the engine (60) is arranged such that the crankcase (61A) and the cylinder head (63) do not overlap with each other in a vehicle plan view,
the starter motor (110) is arranged at a position further downward than the intake pipe (74) in the vehicle side view,
**characterized in that**
the engine (60) is further arranged such that a center axis (C1) of the cylinder (62) is located at a position further downward than a center axis (C2) of the crankshaft (CS) in a cross section orthogonal to the vehicle front-and-rear direction (L),
the starter motor (110) is further arranged at a position further upward than the cylinder (62) in the vehicle side view, and is arranged to at least partially overlap with the cylinder (62) in the vehicle plan view

2. The straddled vehicle (100) according to claim 1, further comprising a storage box (10) provided at a position further upward than the engine (60) and further downward than a seat (5), wherein
the engine unit (6) is configured to be a unit-swing type,
the body frame (1) has a pivot shaft (9),
the engine unit (6) further includes a suspension portion (61S) that attaches the crankcase (61A) to the pivot shaft (9) of the body frame (1),
the suspension portion (61S) is arranged at a position further upward than the cylinder (62) and further forward than the balancer (120) in the vehicle front-and-rear direction (L) in the vehicle side view, and
a center axis (C3) of the starter motor (110) is located at a position further downward than the suspension portion (61S) in the vehicle side view.

3. The straddled vehicle (100) according to claim 2, wherein
a lower surface of the storage box (10) is inclined upward and rearward at a position further upward than the balancer (120), the starter motor (110) and the suspension portion (61S).

4. The straddled vehicle (100) according to claim 2 or 3, wherein
the suspension portion (61S) is arranged to partially overlap with the starter motor (110) in the vehicle side view.

5. The straddled vehicle (100) according to any one of claims 2 to 4, wherein
the suspension portion (61S) is arranged between the intake pipe (74) and the cylinder (62) in the vehicle side view.

## Patentansprüche

1. Ein gespreiztes Fahrzeug (100), aufweisend:
einen Körperrahmen (1); und
eine Motoreinheit (6), die an dem Körperrahmen (1) angebracht ist, wobei die Motoreinheit (6) beinhaltet
einen Motor (60), der ein Kurbelgehäuse (61A), einen Zylinder (62), der an einer Position weiter vorwärts als das Kurbelgehäuse (61A) in einer Fahrzeug-Vorne-und-Hinten-Richtung (L) vorgesehen ist, um an dem Kurbelgehäuse (61A) angebracht zu sein, einen Zylinderkopf (63), der an einer Position weiter vorwärts als der Zylinder (62) vorgesehen ist, um an dem Zylinder (62) angebracht zu sein, und eine Kopfabdeckung (64), die an einer Position weiter vorwärts als der Zylinderkopf (63) vorgesehen ist, um an dem Zylinderkopf (63) angebracht zu sein, aufweist,
ein Einlassrohr (74), das sich rückwärts in der Fahrzeug-Vorne-und-Hinten-Richtung (L) von einer oberen Oberfläche des Zylinderkopfs (63) des Motors (60) erstreckt,
einen Startermotor (110), der ausgestaltet ist, eine Kurbelwelle (CS) des Motors (60) zu drehen,
einen Ausgleicher (120), der ausgestaltet ist, sich zu drehen, um Vibration der Kurbelwelle (CS) zu reduzieren, und
eine Rückförderpumpe (131), die ausgestaltet ist, Öl in dem Kurbelgehäuse (61A) des Motors (60) zu sammeln,
die Rückförderpumpe (131) an einer Position weiter abwärts als die Kurbelwelle (CS) des Motors (60) in einer Fahrzeugseitenansicht angeordnet ist,
eine Abmessung (R1) des Startermotors (110) in einer Oben-Und-Unten-Richtung (V) kleiner als eine Abmessung (R2) einer Drehungstrajektorie des Ausgleichers (120) in der Oben-Und-Unten-Richtung (V) in der Fahrzeugseitenansicht ist,
eine Zentralsachse (C4) des Ausgleichers (120) an einer Position weiter aufwärts als die Zentralachse (C2) der Kurbelwelle (CS) in der Fahrzeugseitenansicht angeordnet ist, und
der Ausgleicher (120) an einer Position weiter abwärts als das Einlassrohr (74) und weiter rückwärts als der Startermotor (110) in der Fahrzeugseitenansicht angeordnet ist, der Motor (60) so angeordnet ist, dass das Kurbelgehäuse (61A) und der Zylinderkopf (63) nicht miteinander in einer Fahrzeugdraufsicht überlappen,
der Startermotor (110) an einer Position weiter abwärts als das Einlassrohr (74) in der Fahrzeugseitenansicht angeordnet ist,
**dadurch gekennzeichnet, dass**
der Motor (60) weiterhin so angeordnet ist, dass eine Zentralachse (C1) des Zylinders (62) an einer Position weiter abwärts als eine Zentralachse (C2) der Kurbelwelle (CS) in einem Querschnitt senkrecht zu der Fahrzeug-Vorne-Und-Hinten-Richtung (L) gelegen ist,
der Startermotor (110) weiterhin an einer Position weiter aufwärts als der Zylinder (62) in der Fahrzeugseitenansicht angeordnet ist, und angeordnet ist, zumindest teilweise mit dem Zylinder (62) in der Fahrzeugdraufsicht zu überlappen.

2. Das gespreizte Fahrzeug (100) gemäß Anspruch 1, weiterhin aufweisend eine Aufbewahrungsbox (10), die an einer Position weiter aufwärts als der Motor (60) und weiter abwärts als ein Sitz (5) vorgesehen ist, wobei
die Motoreinheit (6) ausgestaltet ist, vom Einheitsschwenktyp zu sein,
der Körperrahmen (1) eine Schwenkwelle (9) aufweist,
die Motoreinheit (6) weiterhin einen Aufhängungsabschnitt (61S) beinhaltet, der das Kurbelgehäuse (61A) an der Schwenkwelle (9) des Körperrahmens anbringt,
der Aufhängungsabschnitt (61S) an einer Position weiter aufwärts als der Zylinder (62) und weiter vorwärts als der Ausgleicher (120) in der Fahrzeug-Vorne-Und-Hinten-Richtung (L) in der Fahrzeugseitenansicht angeordnet ist, und
eine Zentralachse (C3) des Startermotors (110) an einer Position weiter abwärts als der Aufhängungsabschnitt (61S) in der Fahrzeugseitenansicht gelegen ist.

3. Das gespreizte Fahrzeug (100) gemäß Anspruch 2, wobei
eine untere Oberfläche der Aufbewahrungsbox (10) an einer Position weiter aufwärts als der Ausgleicher (120), der Startermotor (110) und der Aufhängungsabschnitt (61S) aufwärts und rückwärts geneigt ist.

4. Das gespreizte Fahrzeug (100) gemäß Anspruch 2 oder 3, wobei
der Aufhängungsabschnitt (61S) angeordnet ist, teilweise mit dem Startermotor (110) in der Fahrzeugseitenansicht zu überlappen.

5. Das gespreizte Fahrzeug (100) gemäß irgendeinem der Ansprüche 2 bis 4, wobei
der Aufhängungsabschnitt (61S) zwischen dem Einlassrohr (74) und dem Zylinder (62) in der Fahrzeugseitenansicht angeordnet ist.

## Revendications

1. Véhicule de type à enfourcher (100) comportant :
un châssis (1) ; et
un groupe moteur (6) attaché au châssis (1), où
le groupe moteur (6) comprend
un moteur (60) qui présente un carter de vilebrequin (61A), un cylindre (62) prévu en un emplacement plus avancé que le carter de vilebrequin (61A) dans une direction avant/arrière (L) du véhicule pour être attaché au carter de vilebrequin (61A), une culasse (63) prévue en un emplacement plus avancé que le cylindre (62) pour être attachée au cylindre (62) et un couvercle de culasse (64) prévu en un emplacement plus avancé que la culasse (63) pour être attaché à la culasse (63),
un tuyau d'admission (74) qui s'étend vers l'arrière dans la direction avant/arrière (L) du véhicule à partir d'une surface supérieure de la culasse (63) du moteur (60),
un démarreur (110) qui est configuré pour faire tourner un vilebrequin (CS) du moteur (60),
un équilibreur (120) qui est configuré pour tourner de manière à réduire les vibrations du vilebrequin (CS), et
une pompe de récupération (131) qui est configurée pour récupérer de l'huile dans le carter de vilebrequin (61A) du moteur (60),
la pompe de récupération (131) étant agencée en un emplacement plus bas que le vilebrequin (CS) du moteur (60) dans une vue latérale du véhicule,
une dimension (R1) du démarreur (110) dans une direction de haut en bas (V) est plus petite qu'une dimension (R2) d'une trajectoire de rotation de l'équilibreur (120) dans la direction de haut en bas (V) dans la vue latérale du véhicule,
un axe central (C4) de l'équilibreur (120) est agencé en un emplacement plus élevé que l'axe central (C2) du vilebrequin (CS) dans la vue latérale du véhicule, et
l'équilibreur (120) est agencé en un emplacement plus bas que le tuyau d'admission (74) et plus en arrière que le démarreur (110) dans la vue latérale du véhicule,
le moteur (60) est agencé de telle manière que le carter de vilebrequin (61A) et la culasse (63) ne se superposent pas dans une vue en plan du véhicule,
le démarreur (110) est agencé en un emplacement plus bas que le tuyau d'admission (74) dans la vue latérale du véhicule,
**caractérisé en ce que**
le moteur (60) est en outre agencé de telle manière qu'un axe central (C1) du cylindre (62) est situé en un emplacement plus bas qu'un axe central (C2) du vilebrequin (CS) dans une coupe transversale perpendiculaire à la direction avant/arrière (L) du véhicule, le démarreur (110) est en outre agencé en un emplacement plus élevé que le cylindre (62) dans la vue latérale du véhicule et est agencé de manière à au moins partiellement se superposer au cylindre (62) dans la vue en plan du véhicule.

2. Véhicule de type à enfourcher (100) selon la revendication 1, comportant en outre un coffre de rangement (10) prévu en un emplacement plus élevé que le moteur (60) et plus bas qu'un siège (5), où
le groupe moteur (6) est configuré pour être de type oscillant,
le châssis (1) présente un arbre de pivotement (9),
le groupe moteur (6) comprend en outre une partie de suspension (61S) qui attache le carter de vilebrequin (61A) à l'arbre de pivotement (9) du châssis (1),
la partie de suspension (61S) est agencée en un emplacement plus élevé que le cylindre (62) et plus avancé que l'équilibreur (120) dans la direction avant/arrière (L) du véhicule dans la vue latérale du véhicule, et
un axe central (C3) du démarreur (110) est situé en un emplacement plus bas que la partie de suspension (61S) dans la vue latérale du véhicule.

3. Véhicule de type à enfourcher (100) selon la revendication 2, où
une surface inférieure du coffre de rangement (10) est inclinée vers le haut et vers l'arrière en un emplacement plus élevé que l'équilibreur (120), le démarreur (110) et la partie de suspension (61S).

4. Véhicule de type à enfourcher (100) selon la revendication 2 ou 3, où
la partie de suspension (61S) est agencée de manière à se superposer partiellement au démarreur (110) dans la vue latérale du véhicule.

5. Véhicule de type à enfourcher (100) selon l'une quelconque des revendications 2 à 4, où
la partie de suspension (61S) est agencée entre le tuyau d'admission (74) et le cylindre (62) dans la vue latérale du véhicule.
